# FASCICULE DE BREVET EUROPEEN

(11) **EP 1 146 010 B1**
(45) Date de publication et mention de la délivrance du brevet: **04.01.2006**
(21) Numéro de dépôt: 01400848.6
(22) Date de dépôt: 03.04.2001
(51) Int. Cl.: C01B 3/38, B01J 8/02

(54) **Procédé de production d'un mélange comportant de l'hydrogène et du monoxyde de carbone**
Verfahren zur Herstellung eines Wasserstoff und Kohlenmonoxid enthaltenden Gemisches
Process for the production of a mixture comprising hydrogen and carbon monoxide

(30) Priorité: 13.04.2000 FR 0004766
(43) Date de publication de la demande: 17.10.2001
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Zhdanok, Serguei, 210072 Minsk (BY); Labrune, Philippe, 94100 Saint-Maur (FR)
(74) Mandataire: Mellul-Bendelac, Sylvie Lisette

(56) Documents cités:
- EP-A- 0 913 357
- EP-A- 0 953 543
- DE-A- 3 929 413
- US-A- 2 700 598
- US-A- 4 355 003
- US-A- 5 509 362
- PATENT ABSTRACTS OF JAPAN vol. 016, no. 455 (C-0987), 22 septembre 1992 (1992-09-22) & JP 04 161244 A (TOSHIBA CORP), 4 juin 1992 (1992-06-04)

## Description

L'invention concerne le domaine de la production de mélanges comportant de l'hydrogène et du monoxyde de carbone, par oxydation partielle d'hydrocarbures légers tels que le méthane.

L'hydrogène est un gaz largement utilisé en chimie. On en produit annuellement 500 milliards de m³. Environ 95% de cet hydrogène est une production captive utilisée en raffinage, en pétrochimie, dans la synthèse du méthanol, et pour la production d'ammoniac.

L'hydrogène marchand ne représente qu'une faible fraction de cette production globale, et pour les applications autres que la pétrochimie et les engrais, il nécessite un état de pureté plus ou moins élevé.

Compte tenu des besoins croissants en hydrogène marchand (on observe une croissance d'environ + 10% par an) et des futurs besoins pressentis dans l'industrie en général (chimie, pétrochimie, métallurgie, électronique, chimie fine), dans la production d'énergie décentralisée et dans les transports propres et non polluants utilisant des piles à combustibles, et compte tenu des problèmes soulevés par l'infrastructure de distribution de l'hydrogène (transport, stockage, sécurité), il apparaît de plus en plus nécessaire de disposer de sources d'hydrogène pouvant produire in situ des quantités d'hydrogène relativement faibles dans de bonnes conditions de rentabilité.

La production en masse d'hydrogène captif est effectuée chez les raffineurs et les grands chimistes par différentes méthodes.

La première de ces méthodes est le reformage à la vapeur d'eau des hydrocarbures d'origine pétrolière ou du gaz naturel. C'est une réaction très endothermique, effectuée entre 800 et 900° sur catalyseur et sous une pression d'environ 15 atmosphères. Les brûleurs sont situés à l'extérieur des lits catalytiques, et le mélange hydrocarbure/vapeur d'eau est préchauffé grâce à un échangeur de chaleur qui utilise des gaz de combustion. Ce procédé permet d'atteindre des rapports H₂/CO de 3 à 5 suivant le débit de vapeur.

La seconde de ces méthodes est le reformage mixte. C'est un procédé fonctionnant en mode autothermique où l'énergie thermique nécessaire au reformage à la vapeur sur catalyseur est apportée par la combustion partielle du méthane en CO₂. Le rapport H₂/CO des gaz produits ici est plus faible : typiquement entre 1, 5 et 2,5.

La troisième de ces méthodes est l'oxydation partielle de ces mêmes hydrocarbures. Ce procédé ne nécessite pas de catalyseur. La combustion est effectuée à 1300-1400°C sans vapeur. Ce procédé est exothermique, mais produit moins d'hydrogène que les précédents.

Il faut noter que les réactions de reformage à la vapeur précédemment citées nécessitent des catalyseurs, lesquels sont sensibles aux impuretés présentes dans les hydrocarbures d'origine pétrolière ou contenues dans le gaz naturel. Il faut donc, préalablement aux réactions décrites, procéder à une désuffuration poussée des hydrocarbures. Par contre, l'oxydation partielle également précédemment évoquée permet d'utiliser des hydrocarbures moins propres, mais ce procédé a l'inconvénient de générer des suies.

Une fois réalisée la production du mélange H₂/CO selon l'une des méthodes précédentes, on peut favoriser la réaction de production d'hydrogène par conversion du CO en présence de vapeur d'eau sur catalyseur, selon la réaction :

CO + H₂O → CO₂ + H₂ (1)

Quand on cherche à produire avant tout de l'hydrogène, le reformage à la vapeur semble être le procédé le plus avantageux. Associé à la réaction du gaz à l'eau et à un procédé de séparation des différents gaz produits, par exemple par adsorption à pression modulée (connu dans la littérature sous l'appellation PSA pour Pressure Swing Adsorption), il permet d'obtenir de l'hydrogène de très bonne pureté (comportant moins de quelques dizaines de ppm d'impuretés). La consommation énergétique ramenée au kg d'hydrogène produit est d'environ 40 kWhlkg, ce qui représente un rendement énergétique de 83% environ.

L'hydrogène marchand provient actuellement essentiellement des procédés suivants :
(a) la récupération de l'hydrogène produit dans des opérations de déshydrogénation en chimie et raffinage, impliquant un reformage ou un craquage catalytique ;
(b) le détournement d'une partie de l'hydrogène produit chez les producteurs captifs quand il est en excès ;
(c) la production du coke destiné à la sidérurgie ;
(d) l'électrolyse de solutions de chlorure de sodium, où l'hydrogène est coproduit en même temps que le chlore.

Par ailleurs, de petites unités de production ont été construites, et font appel à la décomposition de molécules riches en hydrogène :
- par craquage thermique de l'ammoniac,
- par reformage catalytique de méthanol,
- par dissociation électrolytique de l'eau.

Ces derniers procédés conduisent à de l'hydrogène dont le coût de revient est élevé en raison du prix des réactifs de départ (en particulier du méthanol) ou de la consommation énergétique (5 kWh par m³ d'hydrogène produit pour l'électrotyse). Le craquage thermique de l'ammoniac est un procédé peu consommateur d'énergie, mais l'utilisation d'ammoniac en fait une solution peu intéressante du point de vue environnemental.

Une alternative intéressante est d'utiliser des générateurs catalytiques d'atmosphères H₂/CO pour les traitements thermiques (par exemple pour effectuer des traitements de cémentation de pièces métalliques), d'ajouter un réacteur de gaz à l'eau en sortie pour convertir le CO en CO₂ et hydrogène, et de séparer le CO₂, l'azote éventuellement présent et l'hydrogène par les méthodes connues à cet effet.

Il existe une abondante littérature décrivant ce type de procédé. L'idée de base est d'effectuer une oxydation partielle d'un mélange comprenant un hydrocarbure et un gaz oxydant, sur un catalyseur généralement à base de métal noble tel le platine, nickel le rhodium, ou encore le palladium. Il est dans ces procédés nécessaire d'ajouter un chauffage annexe par brûleurs ou par résistance électrique, afin d'atteindre un niveau de température suffisant pour que les réactions de reformage, qui sont endothermiques, puissent, démarrer. Une partie de cette littérature décrit des procédés ayant pour but d'améliorer et de contrôler le gradient de température dans de tels réacteurs.

Ainsi le document GB-A-1 598 825 décrit un générateur de gaz endothermique pour la production d'un mélange H₂/CO destiné au traitement thermique. Il utilise de préférence de l'oxygène pur afin d'éviter l'apport extérieur de chaleur nécessaire au bon déroulement de la réaction (que la présence d'azote rendrait nécessaire).

Le document EP-A-450 872 montre un réacteur où est effectuée une réaction endothermique, telle que la production d'un mélange H₂/CO par reformage de méthane par de l'eau. Un brûleur est placé au centre du réacteur, ce qui permet un chauffage plus efficace du lit catalytique où a lieu la réaction.

Le même principe est amélioré dans le document WO-A-90/03 2'18 grâce à une circulation des gaz de combustion autour du lit catalytique, ce qui permet de limiter les gradients de température radiaux et axiaux.

Le document US-A-4 869 730 montre un réacteur en forme de U, dans lequel se produit une réaction gazeuse endothermique permettant la formation d'un mélange CO/H₂/N₂. Le réacteur est chauffé extérieurement par des brûleurs.

On a également proposé de réaliser la production d'un mélange hydrogène/CO dans un réacteur annulaire chauffé extérieurement. Ce réacteur a une forme générale cylindrique, et comporte dans sa partie centrale un cylindre obturé au moins à son extrémité inférieure, et qui peut être soit vide, soit rempli par un matériau inerte, soit équipé d'un moyen de chauffage tel qu'une résistance électrique ou un brûleur. L'espace annulaire du réacteur est rempli par un milieu catalytique. Par rapport à un réacteur cylindrique rempli sur toute sa section par le milieu catalytique, le réacteur annulaire présente l'avantage de diminuer les gradients thermiques à l'intérieur du milieu catalytique. L'épaisseur du milieu catalytique est réduite et la transmission de la chaleur apportée par les moyens de chauffage externe s'y effectue donc plus favorablement. La présence éventuelle d'un brûleur ou d'autres moyens de chauffage dans la partie centrale du réacteur annulaire est également favorable de ce point de vue.

Chacun des procédés préalablement décrits a des inconvénients qui rendent malaisées leurs applications à des installations de petites et moyennes tailles pour produire typiquement moins de 1000 m³lh d'hydrogène. L'investissement nécessité par les procédés de reformage à la vapeur est rédhibitoire pour les petites installations. L'électrolyse de l'eau est un procédé simple à mettre en oeuvre et bien adapté à une production in situ de l'hydrogène ; par contre, il est gros consommateur d'énergie. Le craquage thermique de l'ammoniac et le reformage catalytique du méthanol sont énergétiquement intéressants ; par contre, le coût du méthanol et les problèmes de sécurité et d'environnement liés à l'utilisation d'ammoniac font que ces procédés sont difficiles à exploiter industriellement. Quant à la présence de brûleurs chauffant la zone endothermique d'un réacteur catalytique, elle conduit à des installations peu compactes et mal adaptées à des appareils devant produire de faibles quantités d'hydrogène. Il est certes possible d'assurer ce réchauffage par des résistances, mais cela s'avère coûteux en courant électrique.

Une autre façon de procéder consiste à produire un mélange hydrogène/CO en réalisant l'oxydation partielle d'un hydrocarbure (méthane ou propane, par exemple) par du CO₂ selon les réactions :

CH₄ + CO₂ → 2CO + 2H₂ (2)

ou

C₃H₈ + CO₂ → 6CO + 2H₂ (3)

Une manière avantageuse de réaliser cette réaction consiste à utiliser un réacteur cylindrique, dans la partie supérieure duquel est inséré un oxy-brûleur radiant également cylindrique de diamètre sensiblement plus faible que le réacteur, alimenté en hydrocarbure et en oxygène. Cet oxy-brûleur descend jusque dans la partie inférieure du réacteur, où il amène les gaz de combustion H₂O et CO₂. Cette partie inférieure du réacteur est remplie par un garnissage inerte (par exemple à base d'alumine), dans lequel débouchent lesdits gaz de combustion provenant de l'oxy-brûleur d'une part et arrivent d'autre part les gaz (hydrocarbure et CO₂) nécessaires à la réaction (2) ou (3). On notera que la réaction de combustion dans l'oxy-brûleur produit du CO₂ et de la vapeur d'eau qui sont utilisés dans la réaction de production du mélange hydrogène/CO. Tous ces gaz se mélangent à l'intérieur de la zone inerte et remontent à l'intérieur du réacteur en traversant une zone annulaire définie par la paroi interne du réacteur et la paroi externe de l'oxy-brûleur. C'est dans cette zone annulaire que se produit la réaction (2) ou (3), car elle est remplie par le catalyseur, que son contact avec la paroi de l'oxy-brûleur permet de maintenir à une température de 1200°C environ, malgré les caractères fortement endothermique des réactions (2) et (3). La vapeur d'eau fournie par l'oxy-brûleur est suffisante à elle seule pour prévenir la formation de suies et le bouchage du réacteur ; aucun apport extérieur de vapeur d'eau n'est nécessaire à cet effet. Le mélange hydrogène/CO produit est évacué de la partie supérieure du réacteur, et peut être utilisé sur place ou stocké pour une utilisation ex situ. La teneur en CO du mélange produit par le générateur peut avantageusement être modulée en apportant plus ou moins de CO₂ dans la partie inférieure du réacteur en plus du CO₂ produit par l'oxy-brûleur. On obtient ainsi un réacteur de faible encombrement.

Dans la réaction d'oxydation partielle du méthane (ou d'un autre hydrocarbure léger, tel que du propane, ou du butane) afin d'obtenir un mélange hydrogène/CO, un craquage purement thermique nécessite des températures de l'ordre de 1700°C pour atteindre des taux de conversion très élevés (supérieurs à 99%), avec des temps de réaction suffisamment réduits, de l'ordre de 0,1 s. Le mélange étant en dehors des limites d'inflammabilité et la température adiabatique étant d'environ 650°C, il est nécessaire pour atteindre ces niveaux de température de brûler une partie du combustible.

Une analyse thermodynamique montre néanmoins que si la récupération de chaleur est correctement organisée, il est possible de travailler dans un mode autothermique.

Ce principe a été proposé dans le document US-A-5 441 581 (on pourra également dans cette catégorie se reporter au document WO93/21350) : l'échangeur de chaleur qui est du type gaz-gaz est incorporé dans le procédé de fabrication d'un mélange CO/hydrogène/azote à partir d'un mélange hydrocarbure/air. L'échangeur de chaleur permet de préchauffer le mélange hydrocarbure/air. Néanmoins, dans cette installation, l'échange thermique n'a lieu que par convection. Pour être efficace, il nécessite de grandes surfaces d'échange et des vitesses d'écoulement élevées, conduisant à la réalisation d'échangeurs relativement complexes. Il est également important de noter que le refroidissement s'effectuant lentement, le CO se décompose en CO₂ et carbone suivant l'équilibre de Boudouard, ce qui provoque la formation de suies.

Une des objectifs de la présente invention est de proposer un procédé de production d'un mélange comportant de l'hydrogène et du CO par oxydation partielle d'un hydrocarbure, présentant les caractéristiques suivantes :
- un excellent bilan énergétique permettant de fonctionner en mode autothermique;
- l'utilisation d'une installation de production de faible encombrement et ne nécessitant qu'un investissement réduit ;
- une fiabilité et une simplicité excellentes ;
- la possibilité de traiter tous les types de charges initiales ; et
- une adaptabilité à une production d'ampleur moyenne, de l'ordre de 100 à 1000 m³/h.

A cet effet, l'invention a pour objet un procédé de production d'un mélange comportant de l'hydrogène et du CO du type selon lequel on effectue une oxydation partielle d'un hydrocarbure par un milieu oxygéné ou susceptible de libérer de l'oxygène, et selon lequel on fonctionne en mode autothermique en récupérant la chaleur dégagée par ladite oxydation pour entretenir les réactions endothermiques se produisant entre la fraction non oxydée dudit hydrocarbure et le CO₂ et la vapeur d'eau produits par ladite oxydation, se caractérisant en ce que :
on fait passer le mélange gazeux réactionnel comportant l'hydrocarbure et le milieu oxygéné à travers un milieu poreux qui a été au préalable préchauffé, permettant ainsi de chauffer le mélange gazeux réactionnel par échange thermique avec le milieu poreux jusqu'à un seuil de température suffisant pour amorcer les réactions de combustion, en rendant inutile un apport de chaleur externe en régime permanent.

Comme il apparaîtra clairement à l'homme de métier, le procédé selon l'invention repose sur une combustion en milieu poreux, au cours de laquelle les gaz de combustion restituent leur enthalpie au milieu poreux pour sortir du réacteur à une température proche de la température adiabatique.

Les conditions de filtration, notamment la taille des billes constituant généralement le milieu poreux et la vitesse d'écoulement du gaz, permettent de moduler le seuil de température. Ainsi la température de combustion n'est plus uniquement une fonction du pouvoir calorifique du combustible (température adiabatique), mais est fonction des conditions de filtration (vitesse d'écoulement, capacité calorifique des matériaux, taille des billes poreuses et porosité du milieu, ....). Il en résulte que la température de combustion peut être supérieure à la température adiabatique.

La combustion en milieu poreux présente trois avantages principaux.

Tout d'abord, il est possible d'utiliser des mélanges combustible/comburant hors des limites d'inflammabilité. Ainsi, on peut brûler des mélanges très faiblement chargés en comburant (la principale application étant la destruction des polluants organiques dans l'air), ou brûler des combustibles très riches, donc utiliser une teneur en combustible faible.

D'autre part, l'utilisation de l'énergie est optimale (pas de pertes). Le profil de température du réacteur présente une zone chaude où la combustion a lieu, et une température de sortie des gaz qui est proche de la température adiabatique. Le réacteur peut fonctionner dans un mode autothermique, les seules pertes thermiques proviennent des échanges thermiques par la paroi du réacteur.

En fait, la combustion et la récupération de la chaleur s'effectuent dans le même réacteur. Cela conduit à des installations plus compactes que celles mettant en oeuvre un procédé de combustion classique, et donc à une minimisation des pertes thermiques.

Le procédé selon l'invention pourra par ailleurs adopter l'une ou plusieurs des caractéristiques techniques suivantes :
- ledit milieu poreux préchauffé est formé par un premier matériau poreux inerte, et le mélange gazeux réactionnel rencontre successivement ledit premier matériau poreux inerte, un lit catalytique, puis un second matériau poreux inerte .
- lesdits premier et second matériau poreux inertes sont identiques.
- ledit mélange gazeux réactionnel rencontre successivement lesdits premier matériau poreux inerte, lit catalytique, et second matériau poreux inerte, au sein d'un réacteur cylindrique vertical, dont les extrémités sont remplies par l'un ou l'autre desdits matériaux poreux inertes, et dont la partie centrale est remplie par ledit lit catalytique, le réacteur étant alimenté en mode alterné de la façon suivante :
   i) on procède à l'introduction du mélange gazeux réactionnel au niveau de la partie inférieure du réacteur et l'on recueil le mélange comportant l'hydrogène et le CO à la partie supérieure du réacteur, ou
   ii) on procède à l'introduction du mélange gazeux réactionnel au niveau de la partie supérieure du réacteur (1) et l'on recueil le mélange comportant l'hydrogène et le CO à la partie inférieure du réacteur,

en passant de l'un des modes d'introduction à l'autre ((i) (ii)) en fonction de la progression du front de combustion à l'intérieur du réacteur.
- ledit mélange gazeux réactionnel rencontre successivement lesdits premier matériau poreux inerte, lit catalytique, et second matériau poreux inerte , au sein d'un réacteur présentant l'arrangement suivant :
   a) un premier cylindre, comportant à son extrémité inférieure des moyens d'introduction dudit mélange gazeux réactionnel;
   b) un deuxième cylindre de plus faible diamètre que ledit premier cylindre, inséré dans ledit premier cylindre de manière à ce que son extrémité supérieure soit située à distance de l'extrémité supérieure du premier cylindre et à ce que son extrémité inférieure par laquelle on recueille le mélange comportant l'hydrogène et le CO débouche à l'extérieur du premier cylindre ;
   c) ledit premier matériau poreux inerte remplissant au moins une partie de la hauteur de l'espace annulaire défini par la paroi interne du premier cylindre et la paroi externe du deuxième cylindre, ledit lit catalytique remplissant la partie supérieure du premier cylindre et/ou celle du deuxième cylindre, et ledit second matériau poreux inerte remplissant la partie inférieure du deuxième cylindre.
- on effectue le préchauffage dudit milieu poreux à l'aide de résistances électriques situées à la périphérie du réacteur.
- on effectue le préchauffage dudit milieu poreux en y faisant circuler, préalablement à ladite introduction du mélange réactionnel, un mélange gazeux de préchauffage comportant un hydrocarbure et de l'oxygène permettant une combustion totale (par exemple dans un ratio de 1 mole de méthane pour 2 moles d'oxygène).

Des exemples de mise en oeuvre du procédé selon l'invention et de dispositifs permettant cette mise en oeuvre vont à présent être décrits, en référence aux figures annexées suivantes :
- la Figure 1 qui montre une vue en coupe longitudinale d'un premier exemple d'installation pour la mise en oeuvre du procédé selon l'invention ;
- la Figure 2 qui montre un deuxième exemple d'installation pour la mise en oeuvre du procédé selon l'invention.

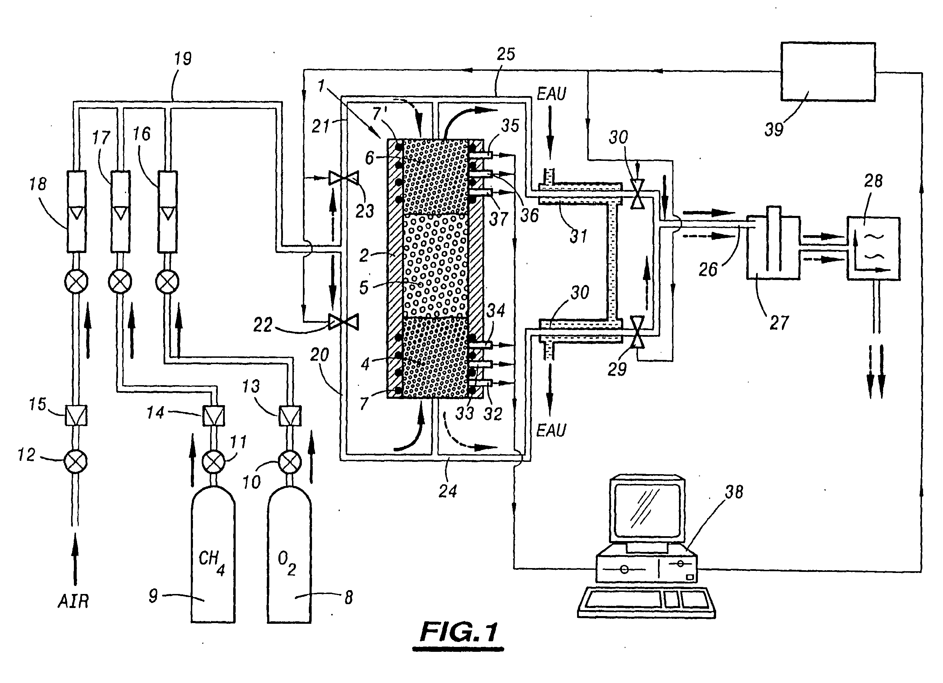

L'élément principal de l'installation selon l'invention représentée sur la Figure 1 est un réacteur cylindrique 1 vertical, comprenant une paroi 2 et un espace interne rempli par un garnissage divisé en plusieurs zones. Selon son axe vertical, le réacteur 1 est divisé en trois zones directement superposées présentant chacune un garnissage de nature déterminée. Sur le mode de réalisation représenté, la partie inférieure du réacteur 1 comporte un premier garnissage 4 composé d'un matériau poreux inerte (i.e exempt de catalyseur), tel que des billes d'alumine (ici de diamètre moyen voisin de 5 mm). La partie centrale du réacteur 1 est garnie elle par un lit catalytique 5, représenté par exemple par un catalyseur à base de platine déposé sur un support d'alumine. La partie supérieure du réacteur 1 comprend un second garnissage de matériau poreux inerte 6 identique au matériau poreux utilisé pour la partie inférieure 4 du réacteur 1. Les hauteurs respectives de ces trois zones de garnissage 4, 5, 6 peuvent varier selon les souhaits de l'opérateur, mais de manière générale les garnissages 4 de la zone inférieure 6 et de la zone supérieure du réacteur 1 ont des hauteurs identiques. Dans un exemple de mise en oeuvre qui sera décrit plus loin, chacune des zones 4, 5, 6 représente sensiblement 1/3 de la hauteur utile du réacteur (c'est-à-dire de la hauteur totale des trois zones de garnissage 4, 5, 6).

A ses extrémités inférieure et supérieure, le réacteur 1 du mode de réalisation illustré ici comporte des systèmes de chauffage sélectif 7 et 7', par exemple des résistances électriques, dont le rôle pour le préchauffage des zones 4 et 6 sera détaillé plus loin.

Le réacteur 1 est alimenté en gaz par une installation comportant :
a) un réservoir d'oxygène 8 (on l'aura compris ce réservoir pourrait également contenir tout autre milieu oxygéné ou susceptible de libérer de l'oxygène tel que l'air, de l'air enrichi, du CO₂....);
b) un réservoir 9 contenant un hydrocarbure léger tel que du méthane, ou un mélange de tels hydrocarbures légers ;

Un ensemble de vannes 10,11, 12, de pompes 13, 14, 15 et de rotamètres 16, 17, 18 permet de régler les débits et les proportions de ces différents gaz, qui sont introduits dans une conduite commune 19 pour former un mélange gazeux CH₄/O₂ dans des proportions variant selon les besoins. Cette conduite 19 se subdivise ensuite en deux branches 20, 21 qui permettent d'introduire le mélange gazeux respectivement à l'extrémité inférieure du réacteur 1 ou à l'extrémité supérieure du réacteur 1. L'admission des gaz dans l'une ou l'autre de ces branches 20, 21 est commandée par deux vannes en tout ou rien 22, 23 situées respectivement sur la conduite 20 conduisant à l'extrémité inférieure du réacteur 10 et sur la conduite 21 conduisant à l'extrémité supérieure du réacteur 1.

Pour rendre possible l'analyse des gaz entrant ou sortant du réacteur 1, des conduites 24, 25 sont piquées sur, respectivement, les conduites 20, 21, et se rejoignent pour former une conduite commune 26 conduisant à une installation de séchage des gaz 27 puis à un appareil d'analyse 28 de ces mêmes gaz, par exemple par chromatographie. Des vannes en tout ou rien 29, 30 sont placées sur les conduites 24, 25, de manière à n'envoyer dans la conduite 26 et dans les appareils de séchage 27 et d'analyse 28 qui lui font suite que des gaz issus soit de la conduite 24, soit de la conduite 25. A leur sortie de l'appareil d'analyse 28, les gaz sont expédiés vers leur lieu d'utilisation ou de stockage, après avoir éventuellement subi une opération de séparation de leurs divers composants.

Des dispositifs de refroidissement 30, 31 sont placés sur les conduites 24, 25, de manière à procurer aux gaz traversant ces conduites 24, 25 une température adaptée à leur séchage et à leur analyse.

Le réacteur 1 est équipé d'une batterie de thermocouples 32, 33, 34 (ou d'autres moyens de mesure de la température) qui traversent sa paroi 2 et permettent de mesurer la température régnant à différents niveaux du milieu poreux 4 situé à l'extrémité inférieure du réacteur 1. Des thermocouples similaires 35, 36, 37 traversent également la paroi 2 du réacteur 1 dans sa partie supérieure, de manière à mesurer la température régnant à différents niveaux du milieu poreux 6 situé dans la partie supérieure du réacteur 1.

L'installation comporte également des moyens de traitement des données 38 qui reçoivent les informations fournies par les thermocouples 32, 33, 34, 35, 36, 37. Ces moyens de traitement des données 38 sont eux-mêmes connectés à des moyens de commande 39 qui actionnent les différentes vannes en tout ou rien 22, 23, 29, 30 commandant l'admission des gaz entrant et sortant du réacteur 1 dans les différentes conduites du circuit gazeux.

Dans un exemple de réalisation, le réacteur 1 a une hauteur utile de 400 mm environ, pour un diamètre de 30 mm. Dans un autre exemple de réalisation, le réacteur 1 a une hauteur utile de 75 mm et un diamètre de 70 mm. Une augmentation du diamètre du réacteur 1 est favorable à une augmentation de la productivité de l'instaflation

On va à présent décrire deux modes d'utilisation du réacteur 1.

Le premier mode d'utilisation du réacteur de la figure 1 n'est pas représentatif de l'invention et n'est donné qu'à titre de référence comparative. Le réacteur 1 est rempli uniquement de billes d'alumine de diamètre moyen voisin de 2 mm, et on impose au gaz une vitesse d'écoulement d'environ 0,5 m/s. En régime permanent, les proportions respectives et les débits des différents gaz injectés ou obtenus sont les suivants :
- un débit total entrant de mélange réactionnel de 2,3 m³/h (CH₄-1/2 O₂),
- une teneur en hydrogène du mélange sortant de 16,7 % (quand le maximum théorique est de 40%).

Des calculs préliminaires montrent que ces conditions devraient théoriquement permettre d'atteindre des températures de l'ordre de 1550°C. Cependant, les résultats montrent que, quelles que soient les conditions opératoires, le seuil maximal de température atteint à l'intérieur du réacteur est de l'ordre de 1450°C. On obtient alors un taux de conversion du méthane de seulement 80%. D'autre part, l'analyse des gaz de sortie montre un écart important par rapport aux concentrations théoriques calculées.

On peut expliquer ce phénomène limitant par l'apparition d'un processus de catalyse hétérogène entre le méthane et le matériau du milieu poreux (l'alumine). La combustion du mélange commence alors à une température trop basse pour avoir un effet d'amplification plus important permettant d'atteindre le seuil critique de 1500°C. On constate, d'autre part, que le profil de température le long du réacteur possède deux zones. Dans la première zone, se produisent les réactions exothermiques

CH₄ + 1/2O₂ → CO + 2H₂ (1)

et

CH₄ + 2O₂ → CO₂ + H₂O (2) ;

Ces réactions sont suivies des réactions endothermiques :

CH₄ +H₂O → CO+ 3H₂ (3)

CH₄ +CO₂ → 2CO+2H₂ (4)

qui conduisent à une rapide décroissance de la température dans la seconde zone du réacteur. L'énergie d'activation importante des réactions (3) et (4) entraîne une forte dépendance à la température du fonctionnement global du réacteur. En dessous de 1200°C, la production d'hydrogène est pratiquement nulle. Un tel mode de fonctionnement du réacteur 1 n'est donc clairement pas satisfaisant.

Dans l'exemple suivant de mise en oeuvre du réacteur 1, qui est un exemple de mise en oeuvre du procédé selon l'invention, le réacteur 1 est utilisé tel qu'il est représenté sur la figure 1. Il est divisé intérieurement en trois zones superposées : une zone inférieure 4 remplie par un matériau de garnissage inerte, à savoir des billes d'alumine de diamètre moyen de 5 mm, une zone centrale 5 remplie par un lit catalytique de platine déposé sur de l'alumine, et une zone supérieure 6 remplie par un matériau de garnissage identique au matériau de garnissage 4 remplissant la partie inférieure du réacteur 1. Chacun des matériaux des zones 4,5,6 est disposé sur une épaisseur représentant environ 1/3 de la hauteur utile du réacteur 1. L'ensemble des matériaux des zones 4, 5, 6 peut être enserré entre deux couches de mousse d'alumine qui servent de support à l'ensemble et permettent d'homogénéiser la distribution des gaz injectés sur l'ensemble de la section du réacteur.

Dans un premier temps, les vannes en tout ou rien 23,29 sont fermées et les vannes en tout ou rien 22,30 sont ouvertes. De cette façon, les différents gaz composant le milieu réactionnel sont introduits par la partie inférieure du réacteur 1 à travers la conduite 20, et les gaz produits dans le réacteur 1 en sortent par sa partie supérieure pour pénétrer dans la conduite 25 (selon les flèches en trait plein sur la Figure 1).

Mais préalablement au démarrage de cette introduction des gaz dans le réacteur 1, on a réalisé un préchauffage de la partie inférieure du premier garnissage 4 au moyen des résistances électriques 7, de façon à assurer une température initiale du milieu suffisante pour démarrer la réaction de combustion du méthane.

Il est néanmoins à noter que ce mode de préchauffage électrique est peu avantageux car il conduit à des phases de mise en régime importantes dues à l'inertie thermique du milieu poreux.

En variante (beaucoup plus rapide qu'un préchauffage thermique classique) cette phase de préchauffage peut être assurée par l'introduction pendant quelques minutes, au stade initial de l'opération, d'un mélange gazeux fortement enrichi en oxygène, par exemple dans des proportions CH₄/2O₂ (combustion totale stoechiométrique).

On peut avantageusement ensuite pendant quelques instants, insuffler un mélange gazeux fortement appauvri en méthane (du genre CH₄ + 20 O₂ par exemple) dans le but de refroidir le premier garnissage 4. On cherche à éviter ainsi un démarrage trop précoce de la réaction de combustion dans le garnissage poreux inerte 4, et à homogénéiser la température dans l'ensemble du réacteur 1.

Après une telle phase de préchauffage « sur-stoechiométrique » on peut ensuite passer à l'injection du mélange réactionnel dans les bonnes proportions stoechiométriques (CH₄-1/2 O₂).

La réaction de combustion du méthane produit alors un fort dégagement d'énergie, qui peut avoir lieu soit dans le premier garnissage poreux inerte 4, soit dans le milieu catalytique 5. Si le dégagement d'énergie a lieu dans le milieu catalytique 5, ou entre le milieu inerte et le milieu 4 et le milieu catalytique 5, il est alors nécessaire d'ajuster les conditions de passage des gaz injectés dans l'installation , afin de limiter la température régnant dans la zone catalytique 5 pour ne pas endommager le catalyseur. En revanche, si le dégagement d'énergie a lieu, pour l'essentiel, dans le premier garnissage poreux inerte 4, il n'est pas nécessaire de prendre des mesures pour limiter la température dans le milieu catalytique 5, et on peut imposer au premier garnissage poreux inerte 4 des températures de l'ordre de 1100°C. Dans ces conditions, on peut utiliser un volume de catalyseur réduit. Les thermocouples 32,33,34 permettent de suivre la progression du front de combustion, et de détecter ainsi à quel moment celui-ci se rapproche du lit catalytique 5. Typiquement, le front de combustion progresse à une vitesse de l'ordre de 6 cm/mn. L'exécution de la réaction exothermique (1) dans le premier garnissage poreux inerte 4 impose ici une température du lit catalytique 5 comprise entre environ 600 et 900°C dans les conditions normales, ce qui permet d'y entretenir les réactions endothermiques (3) et (4). L'ensemble du réacteur fonctionne alors dans un mode autothermique, suivant les principes de la combustion dans un milieu poreux qui ont été précédemment décrits.

Lorsque les données fournies par les thermocouples 32,33,34. aux moyens de traitement des données 38 montrent que le front de combustion a progressé en direction de la partie supérieure du réacteur 1, les moyens de traitement des données 38 imposent aux moyens de commande 39 la fermeture des vannes 22,30 et l'ouverture des vannes 23,29. De cette façon, les gaz réactionnels pénètrent dans la conduite 21 et sont à présent injectés à la partie supérieure du réacteur 1, de manière à tirer profit de l'enthalpie du second garnissage poreux inerte 6 situé à la partie supérieure du réacteur 1 sur lequel vient d'arriver le front de combustion précédent. Les gaz produits dans le réacteur 1 en sortent par sa partie inférieure et pénètrent dans la conduite 24 (selon les flèches en pointillés de la Figure 1). De la même façon que précédemment, ce second garnissage inerte 6 a été au préalable préchauffé par les résistances électriques 7', ou bien est chauffé au début du processus réactionnel par un enrichissement du mélange gazeux en oxygène. De même, les thermocouples 35, 36, 37 suivent la progression du front de combustion, permettant ainsi de détecter à quel moment celui-ci se rapproche du lit catalytique 5 etc...

On fait ainsi fonctionner le réacteur 1 en "flux alterné" de la façon qui vient d'être décrite, garantissant un mode de fonctionnement qui permet d'éviter une dégradation rapide des propriétés du lit catalytique 5.

Dans les conditions expérimentales qui ont été décrites, et pour un débit total entrant voisin de 1 m³/h avec un rapport CH₄/O₂ égal à 2,1 (pour une pression entrante voisine de 1 bar), on obtient un mélange de sortie dont le rapport CH₄/H₂ (rendement) est voisin de 1,7 (le rendement maximal théorique étant de 2), le gaz sortant de l'installation comportant environ 40% d'hydrogène, 2 % de CH₄, et 17 % de CO.

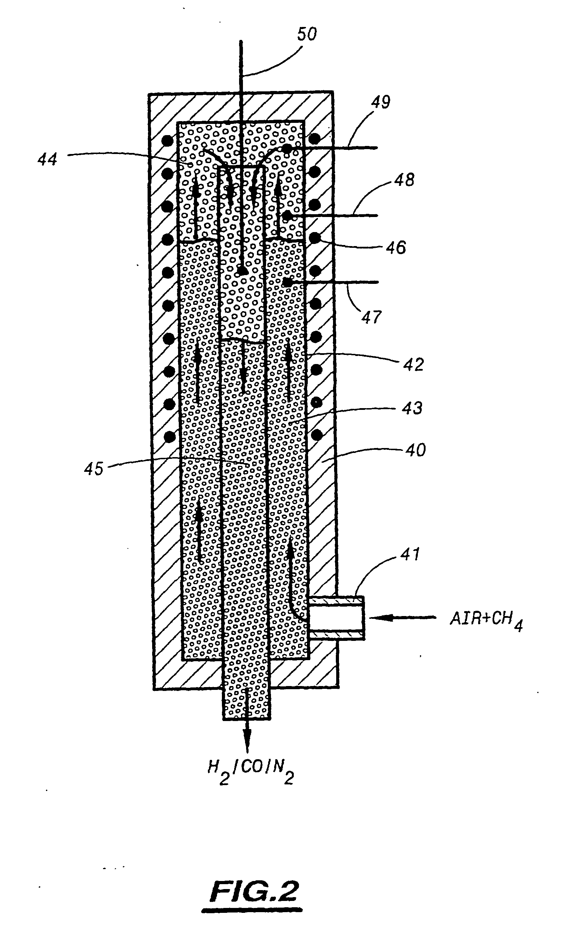

Un autre dispositif selon l'invention, représenté sur la figure 2, comprend deux cylindres imbriqués. Le premier cylindre 40 comporte à sa partie inférieure une conduite 41 par laquelle on peut introduire le mélange d'hydrocarbure et de milieu oxygéné destiné à produire le mélange H₂/CO/N₂ ou H₂/CO voulu. Le deuxième cylindre 42, de plus faible diamètre que le précédent, est inséré de manière à ce que sa surface externe définisse un espace annulaire avec la surface interne du cylindre de fort diamètre 40. L'extrémité supérieure du deuxième cylindre de faible diamètre 42 est située à distance de l'extrémité supérieure du premier cylindre de fort diamètre 40, et l'extrémité inférieure du deuxième cylindre de faible diamètre 42 débouche à l'extérieur du premier cylindre de fort diamètre 40. Après leur entrée dans le cylindre 40, les gaz du mélange réactionnel traversent un garnissage 43 formant un milieu poreux inerte, comparable aux garnissages poreux inertes 4,6 de l'installation de la Figure 1. Ce garnissage 43 peut être, par exemple, composé de billes d'alumine de diamètre moyen de 5 mm environ. Dans la partie supérieure du premier cylindre 40, ce garnissage inerte 43 est remplacé par un lit catalytique 44 représenté, par exemple, par un catalyseur à base de platine déposé sur un support d'alumine. Ce lit catalytique remplit également la partie supérieure du deuxième cylindre 42. Le restant du cylindre de faible diamètre 42, jusqu'à son extrémité inférieure, est rempli par un garnissage 45 en matériau poreux inerte, généralement similaire au garnissage 43 présent dans la partie inférieure du premier cylindre 40. Des moyens de préchauffage tels qu'une résistance électrique 46 sont ici intégrés à la paroi du cylindre de fort diamètre 40, dans sa partie supérieure. Une batterie de thermocouples 47,48,49,50, permet de suivre les températures régnant dans les différentes zones du réacteur. On peut ainsi déterminer les températures régnant dans la partie supérieure du milieu poreux inerte 43 présent dans le premier cylindre 40, et aux différents niveaux du lit catalytique 44, aussi bien pour sa partie présente dans le premier cylindre 40 que pour sa partie présente dans le deuxième cylindre 42.

De la même façon que dans le réacteur de la figure 1, la réaction de combustion entre le méthane et l'oxygène démarre à l'intérieur du milieu poreux inerte 43. La chaleur dégagée par cette réaction est communiquée au lit catalytique 44 de manière à y compenser l'effet endothermique des réactions de reformage 3,4 qui s'y produisent. Là encore, il est possible de déterminer les différents paramètres de fonctionnement du réacteur pour que celui-ci fonctionne de manière autotherme, donc sans qu'aucun apport extérieur de chaleur soit nécessaire, si ce n'est éventuellement pendant la phase de démarrage de l'opération de combustion par l'intermédiaire de la résistance 46 ou par une phase de préchauffage sur-stoechiométrique en oxygène.

A titre indicatif, le réacteur peut avoir les dimensions suivantes : longueur interne du premier cylindre de fort diamètre 40 : 600 mm ; diamètre interne de ce même cylindre 40 : 65 mm ; longueur totale du lit catalytique : 480 mm.

Dans les conditions expérimentales qui ont été décrites, et pour un débit total entrant de 1,5 m³/h avec un rapport CH₄/O₂ égal à 1,9 (pour une pression entrante voisine de 1,8 bar), on obtient un mélange de sortie dont le rapport CH₄/H₂ (rendement) est voisin de 1,6 (le rendement maximal théorique étant de 2), le gaz sortant de l'installation comportant environ 37,1% d'hydrogène, 4,2 % de CH₄, et 14,6 % de CO.

En variante, il est envisageable que le garnissage poreux inerte 43 remplisse le cylindre 40 de fort diamètre jusqu'à son extrémité supérieure. Le lit catalytique 44 n'est alors présent que dans la partie supérieure du cylindre de petit diamètre 42.

Avec un tel réacteur du type en «flux à contre-courant», on obtient une efficacité un peu moindre du point de vue de la récupération de chaleur qu'avec le réacteur précédent dit en «flux alterné». Pour atteindre la même efficacité, un réacteur en flux alterné doit comporter des surfaces d'échange plus élevées que dans le cas d'un réacteur en flux à contre-courant. En revanche, le réacteur en flux à contre-courant fonctionne de manière stationnaire, et ne nécessite aucun moyen de contrôle visant à inverser régulièrement les sens des flux de gaz.

Dans les deux cas de réacteur que l'on vient d'exposer, il apparaît avec l'expérience que le refroidissement des gaz issus de la réaction est suffisamment rapide pour éviter une décomposition du CO qui formerait des suies. Une telle formation de suies n'intervient que lorsqu'on augmente le rapport CH₄/O₂ sensiblement au-delà du rapport stoechiométrique.

Le fonctionnement sous pression est également possible. Il est à noter que les gaz réactionnels rentrent dans le réacteur à la température ambiante ce qui supprime tout risque d'inflammabilité notamment quand on augmente la pression. Des essais effectués à 10 bar, avec des conditions opératoires similaires à celles décrites dans l'exemple, sur le réacteur de type « flux alterné » ont permis de générer des mélange H₂/CO comprenant. 35% d'hydrogène.

Ces types de réacteurs sont relativement simples de conception et de dimensions réduites, et ne nécessitent pas d'apport d'énergie extérieure, excepté pour la période transitoire de démarrage. Ce préchauffage peut comme on l'a vu plus haut avantageusement être effectué par une combustion totale de l'hydrocarbure ce qui permet de supprimer l'ajout de résistances électriques tout en diminuant le temps de mise en régime.. Ils présentent donc un coût de fonctionnement et d'investissement tout à fait réduit. Cela les rend très avantageux par rapport aux procédés d'oxydation catalytique endothermiques précédemment utilisés pour la production de mélanges H₂/CO.

## Revendications

1. Procédé de production d'un mélange comportant de l'hydrogène et du CO, du type selon lequel on effectue une oxydation partielle d'un hydrocarbure par un milieu oxygéné ou susceptible de libérer de l'oxygène, et selon lequel on fonctionne en mode autothermique en récupérant la chaleur dégagée par ladite oxydation pour entretenir les réactions endothermiques se produisant entre la fraction non oxydée dudit hydrocarbure et le CO₂ et la vapeur d'eau produits par ladite oxydation, **caractérisé en ce que** :
on fait passer le mélange gazeux réactionnel comportant l'hydrocarbure et le milieu oxygéné à travers un milieu poreux qui a été au préalable préchauffé, permettant ainsi de chauffer le mélange gazeux réactionnel par échange thermique avec le milieu poreux jusqu'à un seuil de température suffisant pour amorcer les réactions de combustion, en rendant inutile un apport de chaleur externe en régime permanent.

2. Procédé selon la revendication 1, **caractérisé en ce que** ledit milieu poreux préchauffé est formé par un premier matériau poreux inerte, et **en ce que** le mélange gazeux réactionnel rencontre successivement ledit premier matériau poreux inerte, un lit catalytique (5), puis un second matériau poreux inerte (6).

3. Procédé selon la revendication 2, **caractérisé en ce que** lesdits premier et second matériau poreux inertes sont identiques.

4. Procédé selon la revendication 2 ou 3, **caractérisé en ce que** ledit mélange gazeux réactionnel rencontre successivement lesdits premier matériau poreux inerte, lit catalytique (5), et second matériau poreux inerte (6), au sein d'un réacteur cylindrique vertical (1), dont les extrémités sont remplies par l'un ou l'autre desdits matériaux poreux inertes, et dont la partie centrale est remplie par ledit lit catalytique (5), et **en ce que** l'on alimente le réacteur en mode alterné de la façon suivante :
i) on procède à l'introduction du mélange gazeux réactionnel au niveau de la partie inférieure du réacteur (1) et l'on recueil le mélange comportant l'hydrogène et le CO à la partie supérieure du réacteur (1), ou
ii) on procède à l'introduction du mélange gazeux réactionnel au niveau de la partie supérieure du réacteur (1) et l'on recueil le mélange comportant l'hydrogène et le CO à la partie inférieure du réacteur (1),
en passant de l'un des modes ((i) (ii)) d'introduction à l'autre en fonction de la progression du front de combustion à l'intérieur du réacteur.

5. Procédé selon l'une des revendications 1 à 4, **caractérisé en ce que** l'on effectue le préchauffage dudit milieu poreux à l'aide de résistances électriques situées à la périphérie du réacteur.

6. Procédé selon l'une des revendications 1 à 4, **caractérisé en ce que** l'on effectue le préchauffage dudit milieu poreux en y faisant circuler, préalablement à ladite introduction du mélange réactionnel, un mélange gazeux de préchauffage comportant un hydrocarbure et de l'oxygène dans des proportions permettant une combustion totale.

7. Procédé selon l'une des revendications 2 ou 3, **caractérisé en ce que** ledit mélange gazeux réactionnel rencontre successivement lesdits premier matériau poreux inerte, lit catalytique (5), et second matériau poreux inerte (6), au sein d'un réacteur présentant l'arrangement suivant :
- un premier cylindre (40), comportant à son extrémité inférieure des moyens (41) d'introduction dudit mélange gazeux réactionnel;
- un deuxième cylindre (42) de plus faible diamètre que ledit premier cylindre, inséré dans ledit premier cylindre (40) de manière à ce que son extrémité supérieure soit située à distance de l'extrémité supérieure du premier cylindre (40) et à ce que son extrémité inférieure par laquelle on recueille le mélange comportant l'hydrogène et le CO débouche à l'extérieur du premier cylindre (40) ;
- ledit premier matériau poreux inerte (43) remplissant au moins une partie de la hauteur de l'espace annulaire défini par la paroi interne du premier cylindre (40) et la paroi externe du deuxième cylindre (42) ;
- ledit lit catalytique (44) remplissant la partie supérieure du premier cylindre (40) et/ou celle du deuxième cylindre (42) ;
- ledit second matériau poreux inerte (45) remplissant la partie inférieure du deuxième cylindre (42) .

8. Procédé selon la revendication 7, **caractérisé en ce que** l'on effectue le préchauffage dudit milieu poreux à l'aide de résistances électriques situées à la périphérie du réacteur.

9. Procédé selon la revendication 7, **caractérisé en ce que** l'on effectue le préchauffage dudit milieu poreux en y faisant circuler, préalablement à ladite introduction du mélange réactionnel, un mélange gazeux de préchauffage comportant un hydrocarbure et de l'oxygène dans des proportions permettant une combustion totale.

## Patentansprüche

1. Verfahren zur Herstellung eines Gemisches, umfassend Wasserstoff und CO, bei dem eine teilweise Oxydation eines Kohlenwasserstoffes durch ein mit Sauerstoff angereichertes Medium oder ein Medium, das Sauerstoff freisetzen kann, durchgeführt wird und bei dem im autothermischen Modus gearbeitet wird, wobei die durch die Oxydation freigesetzte Wärme wiedergewonnen wird, um die endothermen Reaktionen zu bewahren, die zwischen der nicht oxydierten Fraktion des Kohlenwasserstoffes und dem CO₂ und dem Wasserdampf, der durch die Oxydation erzeugt wird, hervorgerufen werden, **dadurch gekennzeichnet, dass**:
das gasförmige Reaktionsgemisch, das den Kohlenwasserstoff und das mit Sauerstoff angereicherte Medium umfasst, durch ein poröses Medium geschickt wird, das vorher vorerhitzt wurde, wodurch es möglich ist, das gasförmige Reaktiongsgemisch durch Wärmeaustausch mit dem porösen Medium bis zu einer ausreichenden Temperaturschwelle zu erhitzen, um die Verbrennungsreaktionen auszulösen, wobei im Permanentbetrieb eine Wärmezufuhr von außen unnötig wird.

2. Verfahren nach Anspruch 1, **dadurch gekennzeichnet, dass** das vorerhitzte poröse Medium von einem ersten inerten porösen Material gebildet ist, und dass das gasförmige Reaktionsgemisch nach und nach auf das erste inerte poröse Material, ein Katalysebett (5), dann auf ein zweites inertes poröses Material (6) trifft.

3. Verfahren nach Anspruch 2, **dadurch gekennzeichnet, dass** das erste und das zweite inerte poröse Material identisch sind.

4. Verfahren nach Anspruch 2 oder 3, **dadurch gekennzeichnet, dass** das gasförmige Reaktionsgemisch nach und nach auf das erste inerte poröse Material, das Katalysebett (5) und das zweite inerte poröse Material (6) in einem vertikalen zylindrischen Reaktor (1) trifft, dessen Enden mit dem einen oder dem anderen der inerten porösen Materialien gefüllt sind und dessen Mittelteil mit dem Katalysebett (5) gefüllt ist, und dass der Reaktor im alternierenden Modus folgendermaßen gespeist wird:
i) Einführung des gasförmigen Reaktionsgemisches im Bereich des unteren Teils des Reaktors (1) und Sammeln des Gemisches, das den Wasserstoff und das CO umfasst, am oberen Teil des Reaktors (1), oder
ii) Einführung des gasförmigen Reaktionsgemisches im Bereich des oberen Teils des Reaktors (1) und Sammeln des Gemisches, das den Wasserstoff und das CO umfasst, am unteren Teil des Reaktors (1),
wobei von der einen der Einführungsarten (i) zur anderen (ii) in Abhängigkeit vom Fortschreiten der Verbrennungsfront im Inneren des Reaktors übergegangen wird.

5. Verfahren nach einem der Ansprüche 1 bis 4, **dadurch gekennzeichnet, dass** die Vorerhitzung des porösen Materials mit Hilfe von elektrischen Widerständen erfolgt, die sich an der Peripherie des Reaktors befinden.

6. Verfahren nach einem der Ansprüche 1 bis 4, **dadurch gekennzeichnet, dass** die Vorerhitzung des porösen Mediums erfolgt, wobei darin vor der Einführung des Reaktionsgemisches ein vorerhitztes gasförmiges Gemisch zum Zirkulieren gebracht wird, das einen Kohlenwasserstoff und Sauerstoff in Verhältnissen umfasst, die eine völlige Verbrennung ermöglichen.

7. Verfahren nach einem der Ansprüche 2 oder 3, **dadurch gekennzeichnet, dass** das gasförmige Reaktionsgemisch nach und nach auf das erste inerte poröse Material, das Katalysebett (5) und das zweite inerte poröse Material (6) in einem Reaktor trifft, der die folgende Anordnung aufweist:
- einen ersten Zylinder (40), umfassend an seinem unteren Ende Mittel (41) zur Einführung des gasförmigen Reaktionsgemisches;
- einen zweiten Zylinder (42) mit geringerem Durchmesser als der erste Zylinder, der in den ersten Zylinder (40) derart eingesetzt ist, dass sich sein oberes Ende in einem Abstand zum oberen Ende des ersten Zylinders (40) befindet, und dass sein unteres Ende, durch das das den Wasserstoff und das CO enthaltende Gemisch gesammelt wird, außerhalb des ersten Zylinders (40) mündet;
- wobei das erste inerte poröse Material (43) mindestens einen Teil der Höhe des ringförmigen Raums füllt, der von der Innenwand des ersten Zylinders (40) und der Außenwand des zweiten Zylinders (42) definiert ist;
- wobei das Katalysebett (44) den oberen Teil des ersten Zylinders (40) und/oder jenen des zweiten Zylinders (42) füllt;
- wobei das zweite inerte poröse Material (45) den unteren Teil des zweiten zylinders (42) füllt.

8. Verfahren nach Anspruch 7, **dadurch gekennzeichnet, dass** die Vorerhitzung des porösen Materials mit Hilfe von elektrischen Widerständen erfolgt, die an der Peripherie des Reaktors angeordnet sind.

9. Verfahren nach Anspruch 7, **dadurch gekennzeichnet, dass** die vorerhitzung des porösen Materials erfolgt, wobei darin vor der Einführung des Reaktionsgemisches ein vorerhitztes gasförmiges Gemisch zum Zirkulieren gebracht wird, umfassend einen Kohlenwasserstoff und Sauerstoff in Verhältnissen, die eine völlige Verbrennung ermöglichen.

## Claims

1. Process for the production of a mixture comprising hydrogen and CO, of the type according to which partial oxidation of a hydrocarbon by an oxygenated medium or a medium capable of releasing oxygen is carried out, and according to which the processing is carried out under autothermal conditions, the heat given off by said oxidation being recovered to maintain the endothermic reactions which take place between the nonoxidized fraction of said hydrocarbon and the CO₂ and the steam produced by said oxidation, **characterized in that**:
the reaction gas mixture comprising the hydrocarbon and the oxygenated medium is passed through a porous medium which has been preheated beforehand, thus making it possible to heat the reaction gas mixture by heat exchange with the porous medium to a temperature threshold sufficient to initiate combustion reactions, rendering unnecessary an external heat supply when operating continuously.

2. Process according to Claim 1, **characterized in that** said preheated porous medium is formed by a first inert porous material and **in that** the reaction gas mixture successively encounters said first inert porous material, a catalytic bed (5) and then a second inert porous material (6).

3. Process according to Claim 2, **characterized in that** said first and second inert porous material are identical.

4. Process according to Claim 2 or 3, **characterized in that** said reaction gas mixture successively encounters said first inert porous material, said catalytic bed (5) and said second inert porous material (6) within a vertical cylindrical reactor (1), the ends of which are filled with one or other of said inert porous materials and the central part of which is filled with said catalytic bed (5), and **in that** the reactor is fed in alternate mode in the following way:
i) the reaction gas mixture is introduced in the lower part of the reactor (1) and the mixture comprising the hydrogen and the CO is collected at the upper part of the reactor (1), or
ii) the reaction gas mixture is introduced in the upper part of the reactor (1) and the mixture comprising the hydrogen and the CO is collected at the lower part of the reactor (1),
passing from one of the introduction modes ((i) (ii)) to the other as a function of the advance of the combustion front inside the reactor.

5. Process according to one of Claims 1 to 4, **characterized in that** the preheating of said porous medium is carried out using electrical elements situated at the periphery of the reactor.

6. Process according to one of Claims 1 to 4, **characterized in that** the preheating of said porous medium is carried out by circulating therein, prior to said introduction of the reaction mixture, a preheating gas mixture comprising a hydrocarbon and oxygen in proportions which make possible total combustion.

7. Process according to either of Claims 2 and 3, **characterized in that** said reaction gas mixture successively encounters said first inert porous material, said catalytic bed (5) and said second inert porous material (6) within a reactor exhibiting the following arrangement:
- a first cylinder (40) comprising, at its lower end, means (41) for introducing said reaction gas mixture;
- a second cylinder (42) of smaller diameter than said first cylinder, inserted into said first cylinder (40) so that its upper end is situated at a distance from the upper end of the first cylinder (40) and so that its lower end, via which the mixture comprising the hydrogen and the CO is collected, emerges outside the first cylinder (40);
- said first inert porous material (43) filling at least a portion of the height of the annular space defined by the internal wall of the first cylinder (40) and the external wall of the second cylinder (42);
- said catalytic bed (44) filling the upper part of the first cylinder (40) and/or that of the second cylinder (42);
- said second inert porous material (45) filling the lower part of the second cylinder (42).

8. Process according to Claim 7, **characterized in that** the preheating of said porous medium is carried out using electrical elements situated at the periphery of the reactor.

9. Process according to Claim 7, **characterized in that** the preheating of said porous medium is carried out by circulating therein, prior to said introduction of the reaction mixture, a preheating gas mixture comprising a hydrocarbon and oxygen in proportions which make possible total combustion.
